(19) Europäisches Patentamt / European Patent Office / Office européen des brevets

(11) **EP 3 133 051 A2**

(12) **EUROPÄISCHE PATENTANMELDUNG**

(43) Veröffentlichungstag:
**22.02.2017 Patentblatt 2017/08**

(51) Int Cl.:
***C04B 35/111*** (2006.01)    ***C04B 35/634*** (2006.01)

(21) Anmeldenummer: **16180279.8**

(22) Anmeldetag: **20.07.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **21.08.2015 DE 102015113897**

(71) Anmelder: **KERAFOL Keramische Folien GmbH**
**92676 Eschenbach/Opf. (DE)**

(72) Erfinder:
• **Koppe, Franz**
**92676 Eschenbach/Opf. (DE)**
• **Lenhart, Marita**
**91077 Neukirchen (DE)**
• **Krahn, Wolfgang**
**95615 Marktredwitz (DE)**

(74) Vertreter: **Hafner & Kohl**
**Schleiermacherstraße 25**
**90491 Nürnberg (DE)**

(54) **VERFAHREN ZUR HERSTELLUNG EINER BINDERMATRIX FÜR EIN ANORGANISCHES, INSBESONDERE KERAMISCHES, FESTSTOFFPARTIKELMATERIAL**

(57)    Verfahren zur Herstellung einer wenigstens ein Bindermaterial und wenigstens ein Weichmachermaterial enthaltenden Bindermatrix für ein anorganisches, insbesondere keramisches, Feststoffpartikelmaterial, umfassend die folgenden Schritte:
- Bereitstellen wenigstens eines Bindermaterials,
- Bereitstellen wenigstens eines Weichmachermaterials,
- Herstellen einer Mischung durch Vermischen des Bindermaterials und des Weichmachermaterials bei einer bestimmten Mischungstemperatur, wobei die Mischung bestimmte optische Eigenschaften aufweist,
- Abkühlen der Mischung ausgehend von der bestimmten Mischungstemperatur und Erfassen einer kritischen Temperatur, bei welcher eine Veränderung wenigstens einer optischen Eigenschaft der Mischung auftritt,
- Verwenden der Mischung als Bindermatrix für ein anorganisches, insbesondere keramisches, Feststoffpartikelmaterial, sofern die erfasste kritische Temperatur unterhalb einer vorgebbaren oder vorgegebenen Referenztemperatur liegt.

Fig. 1

**Beschreibung**

Die Erfindung betrifft ein Verfahren zur Herstellung einer wenigstens ein Bindermaterial und wenigstens ein Weichmachermaterial enthaltenden Bindermatrix für ein anorganisches, insbesondere keramisches, Feststoffpartikelmaterial.

Im Rahmen der Herstellung keramischer Bauteile wird anorganisches, d. h. insbesondere keramisches, Feststoffpartikelmaterial in eine Bindermatrix eingebracht, um ein disperses Stoffgemenge, typischerweise einen keramischen Schlicker, herzustellen, aus welchem sich keramische Grünkörper und weiter keramische Bauteile herstellen lassen.

Typischerweise enthält eine entsprechende Bindermatrix als Bestandteile u.a. Bindermaterialien, kurz Binder, und Weichmachermaterialien, kurz Weichmacher. Für die Güte der Bindermatrix wie auch für die Güte aus dieser hergestellter keramischer Grünkörper bzw. keramischer Bauteile ist die chemisch-physikalische Verträglichkeit des Bindermaterials und des Weichmachermaterials von essentieller Bedeutung. Sind die in der Bindermatrix enthaltenen Binder- und Weichmachermaterialien chemischphysikalisch schlecht verträglich, können Entmischungserscheinungen auftreten, welche zu einer Anlagerung bzw. Migration des Weichmachermaterials im Bereich der Oberfläche des aus Bindermatrix und darin eingebrachtem anorganischen Feststoffpartikelmaterial hergestellten dispersen Stoffgemenges bzw. der Oberfläche eines aus einem entsprechenden dispersen Stoffgemenge hergestellten keramischen Grünkörpers führen und so eine unerwünschte Porosität, insbesondere einhergehend mit einer ebenso unerwünschten ungleichmäßigen Porenverteilung, bedingen.

Der Erfindung liegt die Aufgabe zugrunde, ein demgegenüber verbessertes Verfahren zur Herstellung einer wenigstens ein Bindermaterial und wenigstens ein Weichmachermaterial enthaltenden Bindermatrix für ein anorganisches, insbesondere keramisches, Feststoffpartikelmaterial anzugeben.

Die Aufgabe wird durch ein Verfahren zur Herstellung einer Bindermatrix für ein anorganisches bzw. keramisches Feststoffpartikelmaterial gemäß Anspruch 1 gelöst.

Das Verfahren dient im Allgemeinen der Herstellung einer Bindermatrix für ein anorganisches, insbesondere keramisches, Feststoffpartikelmaterial. Die Bindermatrix eignet sich sonach insbesondere als Vorprodukt im Zusammenhang mit der Herstellung keramischer Grünkörper. Die Bindermatrix enthält wenigstens ein Bindermaterial, kurz Binder, und wenigstens ein Weichmachermaterial, kurz Weichmacher. Selbstverständlich kann die Bindermatrix darüber hinaus weitere, insbesondere funktionelle, Bestandteile, d. h. z. B. Dispergierungsmittel zur Dispergierung der in der Bindermatrix enthaltenen anorganischen bzw. keramischen Bestandteile, insbesondere des anorganischen Feststoffpartikelmaterials, sowie Stabilisierungsmittel zur Stabilisierung der in der Bindermatrix enthaltenen anorganischen bzw. keramischen Bestandteile, insbesondere des anorganischen Feststoffpartikelmaterials, enthalten.

Um ein disperses Stoffgemenge, d. h. insbesondere einen keramischen Schlicker, herzustellen, ist ein anorganisches bzw. keramisches Feststoffpartikelmaterial in die Bindermatrix einzubringen. Unter einem anorganischen bzw. keramischen Feststoffpartikelmaterial sind einzelne, gegebenenfalls wenigstens teilweise agglomerierte anorganische bzw. keramische Feststoffpartikel bzw. Feststoffpartikelgemische zu verstehen bzw. umfasst ein anorganisches bzw. keramisches Feststoffpartikelmaterial solche Feststoffpartikel bzw. Feststoffpartikelgemische.

Unter anorganische Feststoffpartikel fallen insbesondere Metallpartikel, d. h. z. B. Aluminiumpartikel, bzw. Metallpartikelgemische, Glaspartikel bzw. Glaspartikelgemische sowie Mischungen der Genannten.

Unter keramische Feststoffpartikel fallen sämtliche keramische Partikel bzw. Partikelgemische, d. h. insbesondere oxidkeramische Partikel, nicht-oxidkeramische Partikel, silikatkeramische Partikel sowie Porzellanpartikel bzw. Mischungen der Genannten. Als oxidkeramische Partikel kommen Partikel aus sämtlichen oxidkeramischen Verbindungen, z. B. Aluminiumoxid bzw. Aluminiumoxidverbindungen, in Betracht. Als nicht-oxidkeramische Partikel kommen Partikel aus sämtlichen nicht-oxidkeramischen Verbindungen, d. h. insbesondere keramischen Karbid-, Nitrid-, Silicid-Verbindungen, z. B. Aluminium-, Bor- oder Siliziumkarbid, Aluminium-, Bor- oder Siliziumnitrid, Aluminium- oder Borsilicid, in Betracht. Als silikatkeramische Partikel kommen Partikel aus sämtlichen silikatkeramischen Verbindungen, d. h. insbesondere keramischen Silikatverbindungen, z. B. Alumosilikate, in Betracht.

Die keramischen Feststoffpartikel können zumindest teilweise mit geeigneten Stabilisierungselementen stabilisiert bzw. mit geeigneten Verstärkungselementen verstärkt sein. Oxidkeramische Verbindungen, z. B. Zirkoniumoxid, können z. B. mit Calciumoxid, Magnesiumoxid, Scandiumoxid, Yttriumoxid oder anderen oxidischen Verbindungen, insbesondere oxidischen Seltenerdmetallverbindungen, stabilisiert sein. Oxidkeramische Verbindungen, wie z. B. Aluminiumoxid oder Zirkoniumoxid, können z. B. mit Zirkoniumoxid oder Aluminiumoxid verstärkt sein (vgl. z. B. zirkoniumoxidverstärktes Aluminiumoxid (kurz ZTA) oder aluminiumoxidverstärktes Zirkoniumoxid (kurz ATZ)).

Nachfolgend werden die wesentlichen Schritte des Verfahrens im Einzelnen näher erläutert:

In einem ersten Schritt des Verfahrens wird wenigstens ein Bindermaterial als wesentlicher Bestandteil der herzustellenden Bindermatrix bereitgestellt. In einem zweiten Schritt des Verfahrens wird wenigstens ein Weichmachermaterial als (weiterer) wesentlicher Bestandteil der herzustellenden Bindermatrix bereitgestellt. Die beiden ersten Schritte des Verfahrens können selbstverständlich auch umgekehrt oder gleichzeitig erfolgen.

Bei dem bereitgestellten Bindermaterial handelt es sich typischerweise um eine wenigstens eine Alkoholgruppe (als funktionelle Gruppe) aufweisende chemische, insbesondere organische, Substanz bzw. umfasst das bereitgestellte Bindermaterial wenigstens eine wenigstens eine Alkoholgruppe (als funktionelle Gruppe) aufweisende chemische, insbesondere organische, Substanz. Es wird also insbesondere ein Bindermaterial verwendet, welches als eine wenigstens eine Alkoholgruppe (als funktionelle Gruppe) aufweisende chemische, insbesondere organische, Substanz ausgebildet ist oder wenigstens eine wenigstens eine Alkoholgruppe (als funktionelle Gruppe) aufweisende chemische, insbesondere organische, Substanz umfasst.

Konkret kann es sich bei dem bereitgestellten Bindermaterial z. B. um ein Polyvinylacetal oder eine Polyvinylacetalverbindung, insbesondere Polyvinylbutyral, handeln. Als Bindermaterial kann sonach konkret ein Polyvinylacetal oder eine Polyvinylacetalverbindung, insbesondere Polyvinylbutyral, bereitgestellt bzw. verwendet werden. Die genannten Polyvinylacetale bzw. Polyvinylacetalverbindungen enthalten neben der Alkoholgruppe als weitere funktionelle Gruppen insbesondere Acetat- und/oder Acetalgruppen. Der (mengenmäßige) Anteil der jeweiligen funktionellen Gruppen bestimmt die chemisch-physikalischen Eigenschaften, d. h. insbesondere die Löslichkeit in polaren oder unpolaren Lösungsmitteln, die Hygroskopizität sowie die chemisch-physikalische Verträglichkeit mit Weichmachermaterialien, des jeweiligen Polyvinylacetals bzw. der jeweiligen Polyvinylacetalverbindung wesentlich.

Bei Polyvinylbutyral, kurz PVB, handelt es sich um ein Mischpolymerisat aus unterschiedlichen funktionellen Gruppen, nämlich Alkohol-, Acetat- und Acetalgruppen. Die anteilsmäßige Zusammensetzung der vorgenannten funktionellen Gruppen kann bei Polyvinylbutyralen einen (mengenmäßigen) Anteil an Acetalgruppen (Polyvinylacetal) zwischen 60 und 87 Gew.-%, einen (mengenmäßigen) Anteil an Acetatgruppen (Polyvinylacetat) zwischen 1 und 18 Gew.-% sowie einen (mengenmäßigen) Anteil an Alkoholgruppen (Polyvinylalkohol) zwischen 10 und 40 Gew.-%, insbesondere zwischen 12 und 32 Gew.%, enthalten. Selbstverständlich sind prinzipiell andere (mengenmäßige) Anteile bzw. Anteilsbereiche der genannten funktionellen Gruppen möglich. Die jeweiligen (mengenmäßigen) Anteile können sich zu 100 Gew.-% addieren.

Bei dem bereitgestellten Weichmachermaterial handelt es sich typischerweise um eine wenigstens ein Sauerstoffatom (gegebenenfalls als funktionelle Gruppe) aufweisende chemische, insbesondere organische, Substanz bzw. umfasst das bereitgestellte Weichmachermaterial wenigstens eine wenigstens ein Sauerstoffatom (gegebenenfalls als funktionelle Gruppe) aufweisende chemische, insbesondere organische, Substanz. Es wird also insbesondere ein Weichmachermaterial verwendet, welches als eine wenigstens ein Sauerstoffatom (gegebenenfalls als funktionelle Gruppe) aufweisende chemische, insbesondere organische, Substanz ausgebildet ist oder wenigstens eine wenigstens ein Sauerstoffatom (gegebenenfalls als funktionelle Gruppe) aufweisende chemische, insbesondere organische, Substanz umfasst.

Konkret kann es sich bei dem bereitgestellten Weichmachermaterial z. B. um einen Diester oder wenigstens eine Diesterverbindung, insbesondere eine Diesterverbindung aus Adipinsäure und/oder Phthalsäure und/oder Sebacinsäure, handeln. Als Weichmachermaterial kann sonach insbesondere ein Diester oder wenigstens eine Diesterverbindung, insbesondere eine Diesterverbindung aus Adipinsäure und/oder Phthalsäure und/oder Sebacinsäure, bereitgestellt bzw. verwendet werden. Konkrete Beispiele entsprechender Weichmachermaterialien sind n-Dibutylsebacat oder n-Dibutyladipat.

In einem folgenden dritten Schritt des Verfahrens wird durch Vermischen des wenigstens einen Bindermaterials und des wenigstens einen Weichmachermaterials eine Mischung hergestellt. Unter einer Mischung ist typischerweise eine Lösung zu verstehen; bei dem verwendeten Weichmachermaterial handelt es sich typischerweise um eine flüssige Substanz, bei dem verwendeten Bindermaterial handelt es sich typischerweise um eine feste Substanz. Das verwendete Bindermaterial lässt sich typischerweise in dem verwendeten Weichmachermaterial lösen. Durch die Herstellung der Mischung kann gegebenenfalls die Bindermatrix hergestellt werden. Die Mischung wird auf eine bestimmte Mischungstemperatur temperiert bzw. bei einer bestimmten Mischungstemperatur hergestellt. Die Temperierung der Mischung auf eine bestimmte Mischungstemperatur bzw. die Herstellung der Mischung bei der bestimmten Mischungstemperatur ist der Mischbarkeit bzw. Löslichkeit der jeweiligen zu vermischenden Substanzen zuträglich.

Die Mischungstemperatur liegt typischerweise in einem Bereich zwischen 100 und 160°C, insbesondere bei ca. 150°C. Es wird also typischerweise eine Mischungstemperatur verwendet, die in einem Bereich zwischen 100 und 160°C, insbesondere bei 150°C, liegt. Selbstverständlich können in Ausnahmen auch Mischungstemperaturen unterhalb 100°C bzw. oberhalb 160°C verwendet werden.

Selbstverständlich können in der hergestellten Mischung neben dem wenigstens einen Bindermaterial und dem wenigstens einen Weichmachermaterial weitere Bestandteile, insbesondere, wie weiter oben erwähnt, Dispergierungsmittel und/oder Stabilisierungsmittel, einer Bindermatrix enthalten sein.

Die Mischung respektive Lösung weist bestimmte optische Eigenschaften auf. In dem dritten Schritt des Verfahrens wird zudem wenigstens ein die optischen Eigenschaften der Mischung respektive Lösung charakterisierender optischer Parameter ermittelt. Bei dem zu ermittelnden bzw. ermittelten optischen Parameter kann es sich beispielsweise um die (optische) Transmission der Mischung respektive Lösung handeln. Die Transmission kann unmittelbar oder mittelbar, d. h. über andere optische Parameter, wie z. B. Absorption, Opazität, der Mischung, über welche sich Rückschlüsse auf die Transmission der Mischung ziehen lassen, ermittelt werden. Selbstverständlich ist es grundsätzlich denkbar, andere optische Parameter als die Transmission bzw. Rückschlüsse auf die Transmission ermöglichende optische Parameter der Mischung zu ermitteln, um die optischen Eigenschaften bzw. Veränderungen der optischen Eigenschaften der Mischung zu erfassen. Entsprechend kann beispielsweise auch nur die Absorption, Opazität, etc. der Mischung ermittelt werden.

Die Ermittlung der (Veränderung der) optischen Eigenschaften der Mischung kann gegebenenfalls nur mit dem bloßen Auge erfolgen. Die Ermittlung der (Veränderung der) die optischen Eigenschaften der Mischung charakterisierenden optischen Parameter kann vermittels geeigneter optischer Messeinrichtungen, über welche sich entsprechende optische Parameter, d. h. insbesondere der Transmissionsgrad, der Mischung ermitteln lassen, erfolgen. Der Transmissionsgrad der Mischung (sowie andere optische Parameter) lässt sich beispielsweise vermittels UV/VIS-Spektroskopie ermitteln.

Über die ermittelten optischen Parameter der Mischung lassen sich im Allgemeinen Rückschlüsse auf die chemisch-physikalische Verträglichkeit und somit die Mischbarkeit der miteinander zu vermischenden Substanzen bzw. Rückschlüsse auf die Löslichkeit der ineinander zu lösenden Substanzen ziehen. Die optischen Eigenschaften bzw. die ermittelten optischen Parameter der Mischung stellen insofern ein Maß für die chemisch-physikalische Verträglichkeit bzw. die Mischbarkeit der miteinander zu vermischenden Substanzen bzw. ein Maß für die Löslichkeit der ineinander zu lösenden Substanzen dar.

Bei einer vollständigen Mischbarkeit bzw. Mischung respektive einer vollständigen Löslichkeit bzw. Lösung der Substanzen ist die Mischung bzw. Lösung (nahezu) farblos bzw. klar bzw. transparent. Die Mischung weist somit einen vergleichsweise hohen, d. h. in Abhängigkeit der jeweils konkret miteinander vermischten Substanzen gegebenenfalls variierenden, Transmissionsgrad auf. Der Transmissionsgrad der Mischung kann wenigstens 80% in dem für den Menschen sichtbaren Wellenlängenbereich (ca. 350 bis ca. 750nm) betragen. Selbstverständlich kann der Transmissionsgrad in Abhängigkeit der Mischbarkeit bzw. Löslichkeit der zu vermischenden Substanzen auch unterhalb des vorgenannten Transmissionsgrads von 80% liegen.

Sollte sich in dem dritten Schritt des Verfahrens eine Unmischbarkeit der miteinander zu vermischenden Substanzen bzw. eine Unlöslichkeit der ineinander zu lösenden Substanzen zeigen, ist die Kombination der bereitgestellten Binder- und Weichmachermaterialien zur Herstellung der Bindermatrix nicht geeignet. Es sollte daher eine andere Kombination von Binder- und Weichmachermaterialien zur Herstellung der Bindermatrix gewählt werden.

In allen anderen Fällen wird die Mischung in einem folgenden vierten Schritt des Verfahrens ausgehend von der Mischungstemperatur abgekühlt. Der Einsatz von Kühlelementen, welche eine konzertierte, d. h. insbesondere gleichmäßige, Abkühlung der Mischung ermöglichen, ist denkbar. Das Abkühlen der Mischung erfolgt typischerweise dann, wenn - bei grundsätzlicher Mischbarkeit bzw. Löslichkeit - eine vollständige Mischung bzw. Lösung des wenigstens einen Bindermaterials in dem wenigstens einen Weichmachermaterial gegeben ist bzw. wenn das Bindermaterial vollständig in dem Weichmachermaterial gelöst ist.

Bei Abkühlung der Mischung wird eine mit der Abkühlung der Mischung einhergehende Veränderung wenigstens einer optischen Eigenschaft der Mischung, d. h. z. B. eine Veränderung des Transmissionsgrads der Mischung, d. h. eine Veränderung wenigstens einer optischen Eigenschaft der Mischung in Abhängigkeit der Temperatur der Mischung erfasst.

Es wird untersucht, bei welcher Temperatur sich die wenigstens eine optische Eigenschaft der Mischung verändert. Hierzu können in Abhängigkeit der jeweils konkret betrachteten optischen Eigenschaft der Mischung bestimmte Grenzwerte für die jeweils betrachtete optische Eigenschaft der Mischung herangezogen werden. Entsprechende Grenzwerte werden typischerweise in Abhängigkeit der Zusammensetzung der Mischung bzw. der vermischten Substanzen festgelegt.

Für das Beispiel einer Betrachtung des Transmissionsgrads der Mischung wird entsprechend untersucht, wann der sich mit Veränderung der Temperatur während des Abkühlens verändernde Transmissionsgrad einen vorher, typischerweise in Abhängigkeit der Zusammensetzung der Mischung bzw. der vermischten Substanzen festzulegenden bzw. festgelegten, (zweiten) Transmissionsgrad unterschreitet. Der zweite Transmissionsgrad liegt typischerweise unterhalb des ersten Transmissionsgrads. Der zweite Transmissionsgrad kann insofern als Transmissionsgrenzwert bezeichnet bzw. erachtet werden.

Der zweite Transmissionsgrad ist typischerweise dann erreicht, wenn eine mit dem Auge erkennbare Änderung des Transmissionsgrads der Mischung, d. h. insbesondere eine Trübung der Mischung bzw. der Beginn einer Trübung der Mischung, auftritt.

Es wird also typischerweise untersucht, wann eine Trübung der Mischung bzw. der Beginn einer Trübung der Mischung auftritt. Entsprechend ist eine Veränderung der optischen Eigenschaften der Mischung, d. h. gegebenenfalls auch ein zweiter Transmissionsgrad, gegeben, wenn eine, z. B. milchige, Trübung der Mischung einsetzt bzw. die Mischung beginnt, sich, z. B. milchig, zu trüben. Wesentlich ist, dass die Veränderung der optischen Eigenschaften der Mischung, d. h. gegebenenfalls auch ein zweiter Transmissionsgrad, bereits bei einem Einsetzen einer Trübung der Mischung gegeben sein kann.

In dem vierten Schritt des Verfahrens wird ferner die Temperatur, bei welcher die Veränderung der wenigstens einen optischen Eigenschaft der Mischung, d. h. z. B. eine Trübung, auftritt, erfasst. Die Temperatur, bei welcher die Veränderung der wenigstens einen optischen Eigenschaft der Mischung, d. h. z. B. eine Trübung, auftritt, d. h. z. B. auch die Temperatur, bei welcher der Transmissionsgrad der Mischung auf den zweiten Transmissionsgrad abfällt bzw. den zweiten Transmissionsgrad erreicht, wird als kritische Temperatur bezeichnet und stellt ein Maß für die chemisch-physikalische Verträglichkeit der vermischten Substanzen und somit für die Güte der Mischung bzw. der herzustellenden Bindermatrix dar.

An dieser Stelle sei angemerkt, dass unter entsprechenden ersten bzw. zweiten Transmissionsgraden selbstverständlich auch bestimmte Transmissionsgradbereiche und unter einer entsprechenden kritischen Temperatur selbstverständlich auch ein, typischerweise enger, Temperaturbereich zu verstehen sein kann.

Der folgende fünfte Schritt des Verfahrens ist mit der eigentlichen Herstellung der Bindermatrix verbunden. Die hergestellte Mischung bzw. eine Mischung entsprechender Zusammensetzung wird dann als Bindermatrix für anorganisches bzw. keramisches Feststoffpartikelmaterial verwendet, wenn die erfasste kritische Temperatur unterhalb einer vorgebbaren oder vorgegebenen Referenztemperatur liegt. Die Vorgabe der Referenztemperatur erfolgt typischerweise in Abhängigkeit der chemischen bzw. anteilsmäßigen Zusammensetzung der Mischung.

Die Referenztemperatur liegt typischerweise in einem Bereich zwischen 20 und 100°C, insbesondere in einem Bereich zwischen 40 und 70°C, bevorzugt unterhalb 70°C, besonders bevorzugt unterhalb 40°C. Es wird also typischerweise eine Referenztemperatur verwendet, die in einem Bereich zwischen 20 und 100°C, insbesondere in einem Bereich zwischen 40 und 70°C, bevorzugt unterhalb 70°C, besonders bevorzugt unterhalb 40°C, liegt. Selbstverständlich kann die Referenztemperatur in Ausnahmen auch oberhalb 100°C liegen. Besonders aussagekräftige Ergebnisse ergeben sich gleichwohl insbesondere für Referenztemperaturen unterhalb 100°C.

Untersuchungen zeigten in überraschender Weise, dass die kritische Temperatur, bei welcher eine sichtbare Änderung der optischen Eigenschaften, insbesondere des Transmissionsgrads, der Mischung im Zuge des Abkühlens der Mischung auftritt, ein maßgebliches Kriterium für die chemisch-physikalische Verträglichkeit und somit die Güte der Mischung bzw. der Bindermatrix ist. Im Rahmen des Verfahrens wird entsprechend in Abhängigkeit des Vergleichs der erfassten kritischen Temperatur mit einer Referenztemperatur entschieden, ob und inwieweit die in der Mischung enthaltenen Binder- und Weichmachermaterialien chemisch-physikalisch verträglich sind und sich die Mischung insofern als Bindermatrix für anorganisches bzw. keramisches Feststoffpartikelmaterial eignet.

Liegt die erfasste kritische Temperatur unterhalb der Referenztemperatur, eignet sich die hergestellte Mischung als Bindermatrix für ein anorganisches, insbesondere keramisches, Feststoffpartikelmaterial bzw. wird als Bindermatrix für ein anorganisches, insbesondere keramisches, Feststoffpartikelmaterial verwendet. In die Bindermatrix kann ein anorganisches, insbesondere keramisches, Feststoffpartikelmaterial eingebracht werden.

Mit einer gemäß dem vorstehend beschriebenen Verfahren hergestellten Bindermatrix stellt sich die im Zusammenhang mit dem eingangs beschriebenen Stand der Technik erörterte Problematik von Entmischungserscheinungen, welche zu einer Anlagerung bzw. Migration von Weichmachermaterialien im Bereich der Oberfläche des aus Bindermatrix und darin eingebrachtem anorganischen Feststoffpartikelmaterial hergestellten dispersen Stoffgemenges bzw. der Oberfläche eines aus einem entsprechenden dispersen Stoffgemenge hergestellten keramischen Grünkörpers führen und so eine unerwünschte Porosität, insbesondere einhergehend mit einer ebenso unerwünschten ungleichmäßigen Porenverteilung, bedingen, nicht.

Das wenigstens eine Weichmachermaterial kann aus einer im Hinblick auf die chemisch-physikalische Verträglichkeit des Weichmachermaterials mit dem wenigstens einen Bindermaterial, insbesondere im Hinblick auf die Löslichkeit des Bindermaterials in dem Weichmachermaterial, getroffenen Vorauswahl ausgewählt werden. Die Vorauswahl kann anhand einer Ermittlung des prozentualen Anteils der Sauerstoffatome in dem Weichmachermaterial und eines Vergleichs des ermittelten prozentualen Sauerstoffanteils in dem Weichmachermaterial mit einem für wenigstens ein bestimmtes Bindermaterial festlegbaren oder festgelegten Sauerstoffanteilskriterium getroffen werden. Der prozentuale Sauerstoffanteil ergibt sich aus dem Verhältnis der Anzahl der Sauerstoffatome in einem Weichmachermaterialmolekül und der Anzahl der übrigen Atome in dem Weichmachermaterialmolekül. Es werden dann typischerweise nur Weichmachermaterialien vorausgewählt und im Weiteren zur Herstellung der Bindermatrix bereitgestellt, deren ermittelter Sauerstoffanteil das für das bestimmte Bindermaterial festlegbare oder festgelegte Sauerstoffanteilskriterium erfüllt.

Mit anderen Worten kann vor dem Bereitstellen des Weichmachermaterials eine Vorauswahl wenigstens eines Weichmachermaterials aus einer bestimmten Anzahl an Weichmachermaterialen im Hinblick auf die chemische Verträglichkeit des Weichmachermaterials mit dem wenigstens einen Bindermaterial, insbesondere im Hinblick auf die Löslichkeit des Bindermaterials in dem wenigstens einen Weichmachermaterial, getroffen werden, indem der prozentuale (molekülbezogene) Anteil der Sauerstoffatome in dem Bindermaterial ermittelt und mit einem Sauerstoffanteilskriterium für ein bestimmtes Weichmachermaterial verglichen wird. Ein Bindermaterial wird dann in Abhängigkeit des Vergleichsergebnisses bereitgestellt.

Der prozentuale Anteil der Sauerstoffatome in einem Weichmachermaterial kann aus dem Quotienten der Gesamtanzahl der Sauerstoffatome in dem Weichmachermaterial, d. h. in einem Molekül des Weichmachermaterials, und der Gesamtanzahl der übrigen Atome, d. h. bei organischen Weichmachermaterialien typischerweise Kohlenstoff- und Wasserstoffatome, in dem Molekül des Weichmachermaterials ermittelt werden. Zur Ermittlung des prozentualen Anteils der Sauerstoffatome ("O-Atome") in einem Weichmachermaterialmolekül kann nachfolgende Formel herangezogen werden:

$$\frac{Anzahl\ der\ O\text{-}Atome}{Anzahl\ der\ übrigen\ Atome} \cdot 100\% = prozentualer\ Anteil\ der\ O\text{-}Atome$$

Das Sauerstoffanteilskriterium ist insbesondere in Abhängigkeit der chemischen Struktur des mit dem Bindermaterial zu vermischenden Weichmachermaterials festzulegen. Maßgeblich ist dabei insbesondere der prozentuale (molekülbezogene) Anteil an veresterten Alkoholgruppen, allgemein der Anteil an Sauerstoffatome enthaltenden Gruppen, d. h. insbesondere Ester- oder Ethergruppen, bzw. einzelnen Sauerstoffatomen in dem Weichmachermaterial, in Abhängigkeit dessen das Sauerstoffkriterium sonach typischerweise festgelegt wird.

Bei einem Bindermaterial mit einem prozentualen (molekülbezogenen) Anteil an Alkoholgruppen pro Bindermaterialmolekül in einem Bereich zwischen 15 und 45% kann ein Weichmachermaterial mit einem prozentualen (molekülbezogenen) Anteil an Sauerstoffatomen von wenigstens 5%, insbesondere wenigstens 7,5%, bevorzugt wenigstens 10%, ausgewählt werden.

Bei einem Bindermaterial mit einem prozentualen (molekülbezogenen) Anteil an Alkoholgruppen pro Bindermaterialmolekül in einem Bereich zwischen 10 und 20% kann gegebenenfalls auch ein Weichmachermaterial mit einem prozentualen (molekülbezogenen) Anteil an Sauerstoffatomen von höchstens 10%, insbesondere höchstens 4%, ausgewählt werden.

Die Erfindung betrifft neben dem Verfahren zur Herstellung einer Bindermatrix für ein anorganisches bzw. keramisches Feststoffpartikelmaterial auch ein Verfahren zur Herstellung eines keramischen Grünkörpers. Das Verfahren zur Herstellung eines keramischen Grünkörpers zeichnet sich durch die folgenden Schritte aus:

- Bereitstellen einer gemäß dem vorstehend beschriebenen Verfahren hergestellten Bindermatrix,
- Einbringen wenigstens eines anorganischen, insbesondere keramischen, Feststoffpartikelmaterials sowie gegebenenfalls weiterer Zusatzstoffe, insbesondere Dispergierungsmittel zur Dispergierung der in der Bindermatrix enthaltenen anorganischen bzw. keramischen Bestandteile, insbesondere des anorganischen bzw. keramischen Feststoffpartikelmaterials, und/oder Stabilisierungsmittel zur Stabilisierung der in der Bindermatrix enthaltenen anorganischen bzw. keramischen Bestandteile, insbesondere des anorganischen bzw. keramischen Feststoffpartikelmaterials, in die Bindermatrix unter Ausbildung eines (dispersen) Stoffgemenges, insbesondere eines keramischen Schlickers,
- Ausbilden, d. h. z. B. Gießen, des herzustellenden keramischen Grünkörpers aus dem (dispersen) Stoffgemenge.

Da im Rahmen des Verfahrens zur Herstellung des keramischen Grünkörpers eine Bindermatrix, welche gemäß dem vorstehend beschriebenen Verfahren zur Herstellung einer Bindermatrix hergestellt wurde, verwendet wird, gelten sämtliche Ausführungen im Zusammenhang mit dem Verfahren zur Herstellung einer Bindermatrix analog für das Verfahren zur Herstellung des keramischen Grünkörpers.

In dem verfahrensgemäß hergestellten keramischen Grünkörper liegt der Anteil an Feststoffpartikelmaterial insbesondere zwischen 80 und 95 Gew.-%, der Anteil an Bindermatrix liegt insbesondere zwischen 5 und 20 Gew.-%. Die jeweiligen Anteile an Feststoffpartikelmaterial und Bindermatrix addieren sich zu 100 Gew.-%.

Der verfahrensgemäß hergestellte keramische Grünkörper weist nach einer Temperaturbehandlung, d. h. insbesondere einem Sintern, in einem Temperaturbereich zwischen 1300 und 1750°C, insbesondere zwischen 1450 und 1550°C, typischerweise eine Sinterschwindung in einem Bereich zwischen 15 und 25%, insbesondere zwischen 16 und 22%, auf. Die Sinterdichte eines durch Sintern in dem vorgenannten Temperaturbereich aus dem keramischen Grünkörper hergestellten gesinterten keramischen Bauteils beträgt typischerweise wenigstens 95% der theoretischen Dichte (bezogen auf die Elementarzelle der kristallinen Struktur des keramischen Bauteils).

Bei dem verfahrensgemäß hergestellten keramischen Grünkörper handelt es sich insbesondere um eine keramische Grünkörperfolie (Grünfolie). Der keramische Grünkörper weist sonach insbesondere eine folienartige Gestalt auf.

Sofern es sich bei dem verfahrensgemäß hergestellten keramischen Grünkörper um eine keramische Grünkörperfolie (Grünfolie) handelt, liegt deren Dicke typischerweise in einem Bereich zwischen 10 und 2500$\mu$m, insbesondere zwischen 50 und 1000$\mu$m.

Neben dem Verfahren zur Herstellung des keramischen Grünkörpers betrifft die Erfindung weiter ein keramisches Vorprodukt bzw. Produkt. Ein keramisches Vorprodukt kann ein gemäß dem vorstehend beschriebenen Verfahren zur Herstellung des keramischen Grünkörpers hergestellter keramischer Grünkörper sein. Ein keramisches Vorprodukt bzw. ein keramisches Produkt jedoch kann auch aus einem entsprechenden keramischen Grünkörper, insbesondere durch Sintern, hergestellt sein. Ein keramisches Vorprodukt kann also ungesintert, teilgesintert oder vollständig gesintert vorliegen. Ein keramisches Produkt liegt typischerweise teilgesintert oder vollständig gesintert vor.

Bei dem keramischen Vorprodukt bzw. Produkt kann es sich z. B. um ein Vorprodukt für eine keramische Leiterplatte oder eine keramische Leiterplatte, oder um ein Vorprodukt für einen keramischen Sensor, insbesondere einen Druck-, Gas-, oder Temperatursensor, oder einen keramischer Sensor, insbesondere einen Druck-, Gas-, oder Temperatursensor, oder um ein Vorprodukt eines Brennstoffzellenelements, insbesondere eine Elektrode oder einen Elektrolyten, oder um ein Brennstoffzellenelement, insbesondere eine Elektrode oder einen Elektrolyten, oder um ein Vorprodukt eines Brennhilfsmittels oder ein Brennhilfsmittel verwendet wird, oder um ein Vorprodukt für ein Katalysatorelement oder ein Katalysatorelement, oder um ein Vorprodukt eines Verschleißbauteils, insbesondere ein Verschleiß ausgesetztes Bremselement, insbesondere eines Kraftfahrzeugs, oder ein Verschleißbauteil, insbesondere ein Verschleiß ausgesetztes Bremselement, insbesondere für ein Kraftfahrzeug, oder um ein Vorprodukt für ein thermisch leitfähiges Leitungselement oder ein thermisch leitfähiges Leitungselement, oder um ein Vorprodukt für ein Heizelement, insbesondere ein Flachheizelement, oder ein Heizelement, insbesondere ein Flachheizelement, handeln.

Das keramische Vorprodukt bzw. das keramische Produkt kann mit geeigneten Dotierungsmitteln bzw. -stoffen dotiert sein, um eine gezielte Beeinflussung der physikalischen Eigenschaften bzw. eine Funktionalisierung, z. B. im Hinblick auf bestimmte physikalische, d. h. z. B. elektrische, mechanische, thermische, tribologische, Eigenschaften, des keramischen Vorprodukts bzw. des keramischen Produkts zu realisieren.

Überdies betrifft die Erfindung die Verwendung eines entsprechenden keramischen Vorprodukts bzw. keramischen Produkts als Vorprodukt für eine keramische Leiterplatte oder als keramische Leiterplatte, oder als Vorprodukt für einen keramischen Sensor, insbesondere einen Druck-, Gas-, oder Temperatursensor, oder als keramischen Sensor, insbesondere als Druck-, Gas-, oder Temperatursensor, oder als Vorprodukt eines Brennstoffzellenelements, insbesondere einer Elektrode oder eines Elektrolyten, oder als Brennstoffzellenelement, insbesondere als Elektrode oder als Elektrolyt, oder als Vorprodukt eines Brennhilfsmittels oder als Brennhilfsmittel, oder als Vorprodukt für ein Katalysatorelement oder als Katalysatorelement, oder als Vorprodukt eines Verschleißbauteils, insbesondere eines Verschleiß ausgesetzten Bremselements, insbesondere eines Kraftfahrzeugs, oder als Verschleißbauteil, insbesondere als ein Verschleiß ausgesetztes Bremselement, insbesondere für ein Kraftfahrzeug, oder als Vorprodukt für ein thermisch leitfähiges Leitungs- oder Leitelement oder als thermisch leitfähiges Leitungs- oder Leitelement, oder als Vorprodukt für ein Heizelement, insbesondere ein Flachheizelement, oder als Heizelement, insbesondere Flachheizelement.

Die Erfindung ist anhand von Ausführungsbeispielen in den Zeichnungsfiguren näher erläutert. Dabei zeigt:

Fig. 1    ein Blockdiagramm zur Veranschaulichung eines Verfahrens zur Herstellung einer Bindermatrix für ein keramisches Feststoffpartikelmaterial gemäß einem Ausführungsbeispiel;

Fig. 2    eine Prinzipdarstellung eines keramischen Bauteils, welches eine gemäß einem Ausführungsbeispiel hergestellte Bindermatrix für keramisches Feststoffpartikelmaterial enthält; und

Fig. 3    eine Prinzipdarstellung eines keramischen Bauteils, welches eine gemäß dem Stand der Technik hergestellte Bindermatrix für keramisches Feststoffpartikelmaterial enthält.

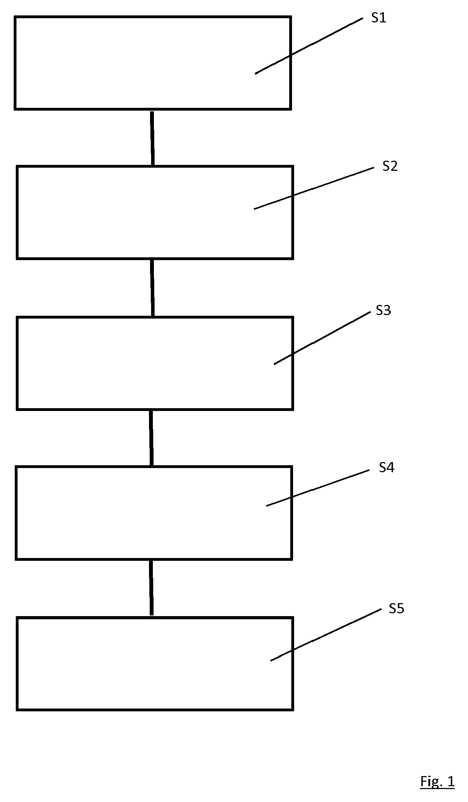

Fig. 1 zeigt ein Blockdiagramm zur Veranschaulichung eines Verfahrens zur Herstellung einer Bindermatrix für ein keramisches Feststoffpartikelmaterial gemäß einem Ausführungsbeispiel.

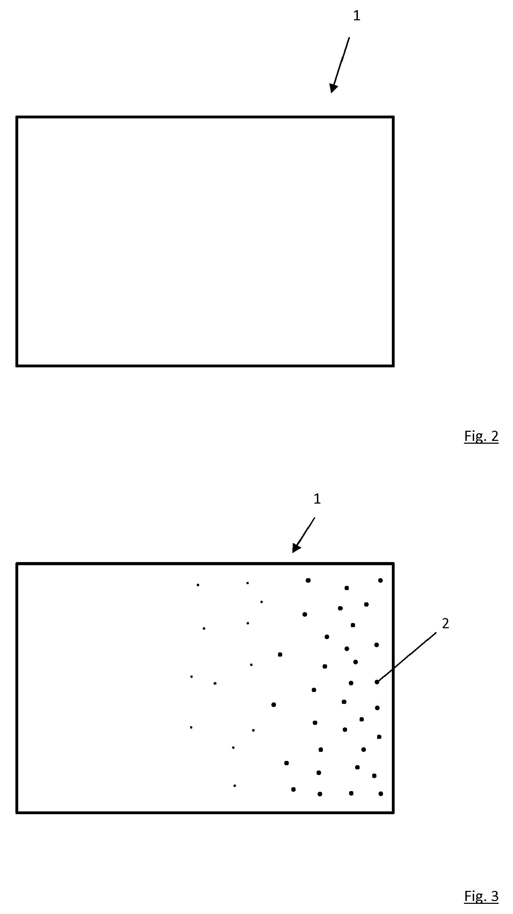

Das Verfahren dient der Herstellung einer Bindermatrix für ein anorganisches bzw. keramisches Feststoffpartikelmaterial. Die Bindermatrix eignet sich sonach als Vorprodukt im Zusammenhang mit der Herstellung keramischer Grünkörper bzw. keramischer Bauteile 1 (vgl. Fig. 2). Die Bindermatrix enthält ein oder mehrere Bindermaterialien, kurz Binder, und ein oder mehrere Weichmachermaterialien, kurz Weichmacher. Die Bindermatrix enthält darüber hinaus weitere funktionelle Bestandteile, d. h. z. B. Dispergierungsmittel zur Dispergierung der in der Bindermatrix enthaltenen anorganischen bzw. keramischen Bestandteile sowie Stabilisierungsmittel zur Stabilisierung der in der Bindermatrix enthaltenen anorganischen bzw. keramischen Bestandteile enthalten.

Um ein disperses Stoffgemenge, d. h. einen keramischen Schlicker, herzustellen, wird ein anorganisches bzw. keramisches Feststoffpartikelmaterial in die Bindermatrix eingebracht. Unter einem anorganischen bzw. keramischen Feststoffpartikelmaterial sind einzelne, gegebenenfalls wenigstens teilweise agglomerierte anorganische bzw. keramische Feststoffpartikel bzw. Feststoffpartikelgemische zu verstehen bzw. umfasst ein solches Feststoffpartikelmaterial solche Feststoffpartikel bzw. Feststoffpartikelgemische.

Anorganische Feststoffpartikel sind insbesondere Metallpartikel, d. h. z. B. Aluminiumpartikel, bzw. Metallpartikelgemische, Glaspartikel bzw. Glaspartikelgemische sowie Mischungen der Genannten.

Keramische Feststoffpartikel sind sämtliche keramische Partikel bzw. Partikelgemische, d. h. insbesondere oxidkeramische Partikel, nicht-oxidkeramische Partikel, silikatkeramische Partikel sowie Porzellanpartikel bzw. Mischungen der Genannten. Als oxidkeramische Partikel kommen Partikel aus sämtlichen oxidkeramischen Verbindungen, z. B. Aluminiumoxid bzw. Aluminiumoxidverbindungen, in Betracht. Als nicht-oxidkeramische Partikel kommen Partikel aus sämtlichen nicht-oxidkeramischen Verbindungen, d. h. insbesondere keramischen Karbid-, Nitrid-, Silicid-Verbindungen, z. B. Aluminium-, Bor- oder Siliziumkarbid, Aluminium-, Bor- oder Siliziumnitrid, Aluminium- oder Borsilicid, in Betracht. Als silikatkeramische Partikel kommen Partikel aus sämtlichen silikatkeramischen Verbindungen, d. h. insbesondere keramischen Silikatverbindungen, z. B. Alumosilikate, in Betracht.

Die keramischen Feststoffpartikel können zumindest teilweise mit geeigneten Stabilisierungselementen stabilisiert bzw. mit geeigneten Verstärkungselementen verstärkt sein. Oxidkeramische Verbindungen, z. B. Zirkoniumoxid, können z. B. mit Calciumoxid, Magnesiumoxid, Scandiumoxid, Yttriumoxid oder anderen oxidischen Verbindungen, insbesondere oxidischen Seltenerdmetallverbindungen, stabilisiert sein. Oxidkeramische Verbindungen, wie z. B. Aluminiumoxid oder Zirkoniumoxid, können z. B. mit Zirkoniumoxid oder Aluminiumoxid verstärkt sein, z. B. zirkoniumoxidverstärktes Aluminiumoxid (kurz ZTA) oder aluminiumoxidverstärktes Zirkoniumoxid (kurz ATZ).

In dem in Fig. 1 durch den Kasten S1 angedeuteten ersten Schritt des Verfahrens wird wenigstens ein Bindermaterial als wesentlicher Bestandteil der herzustellenden Bindermatrix bereitgestellt. In dem in Fig. 1 durch den Kasten S2 angedeuteten zweiten Schritt des Verfahrens wird wenigstens ein Weichmachermaterial als (weiterer) wesentlicher Bestandteil der herzustellenden Bindermatrix bereitgestellt.

Bei dem bereitgestellten Bindermaterial handelt es sich typischerweise um eine wenigstens eine Alkoholgruppe (als funktionelle Gruppe) aufweisende chemische, insbesondere organische, Substanz bzw. umfasst das bereitgestellte Bindermaterial wenigstens eine wenigstens eine Alkoholgruppe (als funktionelle Gruppe) aufweisende chemische, insbesondere organische, Substanz.

Konkret handelt es sich bei dem bereitgestellten Bindermaterial um ein Polyvinylacetal oder eine Polyvinylacetalverbindung, insbesondere Polyvinylbutyral. Polyvinylacetale bzw. Polyvinylacetalverbindungen enthalten neben der Alkoholgruppe als weitere funktionelle Gruppen Acetat- und Acetalgruppen. Der (mengenmäßige) Anteil der jeweiligen funktionellen Gruppen bestimmt die chemisch-physikalischen Eigenschaften, d. h. z. B. die Löslichkeit in polaren oder unpolaren Lösungsmitteln, die Hygroskopizität sowie die chemisch-physikalische Verträglichkeit mit Weichmachermaterialien, des jeweiligen Polyvinylacetals bzw. der jeweiligen Polyvinylacetalverbindung wesentlich.

Bei dem bereitgestellten Weichmachermaterial handelt es sich um eine wenigstens ein Sauerstoffatom (gegebenenfalls als funktionelle Gruppe) aufweisende chemische, insbesondere organische, Substanz bzw. umfasst das bereitgestellte Weichmachermaterial wenigstens eine wenigstens ein Sauerstoffatom (gegebenenfalls als funktionelle Gruppe) aufweisende chemische, insbesondere organische, Substanz.

Konkret handelt es sich bei dem bereitgestellten Weichmachermaterial um einen Diester oder wenigstens eine Diesterverbindung, insbesondere eine Diesterverbindung aus Adipinsäure und/oder Phthalsäure und/oder Sebacinsäure.

In dem in Fig. 1 durch Kasten S3 angedeuteten dritten Schritt des Verfahrens wird durch Vermischen des Bindermaterials und des Weichmachermaterials eine Mischung hergestellt. Unter einer Mischung ist eine Lösung zu verstehen; bei dem verwendeten Weichmachermaterial handelt es sich um eine flüssige Substanz, bei dem verwendeten Bindermaterial handelt es sich um eine feste Substanz. Das verwendete Bindermaterial lässt sich in dem verwendeten Weichmachermaterial lösen. Durch die Herstellung der Mischung wird die Bindermatrix hergestellt. Die Mischung wird auf eine bestimmte Mischungstemperatur temperiert bzw. bei einer bestimmten Mischungstemperatur hergestellt.

Die Mischungstemperatur liegt in einem Bereich zwischen 100 und 160°C, insbesondere bei ca. 150°C.

In der hergestellten Mischung sind neben dem Bindermaterial und dem Weichmachermaterial weitere Bestandteile, d. h. insbesondere entsprechende Dispergierungsmittel bzw. Stabilisierungsmittel, enthalten.

Die Mischung respektive Lösung weist bestimmte optische Eigenschaften auf. In dem dritten Schritt des Verfahrens wird zudem wenigstens ein die optischen Eigenschaften der Mischung respektive Lösung charakterisierender optischer Parameter ermittelt. Bei dem zu ermittelnden bzw. ermittelten optischen Parameter handelt es sich z. B. um die (optische) Transmission bzw. den Transmissionsgrad der Mischung respektive Lösung. Der Transmissionsgrad der Mischung (sowie andere optische Parameter) lässt sich beispielsweise vermittels UV/VIS-Spektroskopie ermitteln.

Über den ermittelten Transmissionsgrad der Mischung lassen sich Rückschlüsse auf die chemisch-physikalische Verträglichkeit und somit die Mischbarkeit der miteinander zu vermischenden Substanzen bzw. Rückschlüsse auf die Löslichkeit der ineinander zu lösenden Substanzen ziehen. Der ermittelte Transmissionsgrad der Mischung stellt insofern ein Maß für die chemisch-physikalische Verträglichkeit bzw. die Mischbarkeit der miteinander zu vermischenden Substanzen bzw. ein Maß für die Löslichkeit der ineinander zu lösenden Substanzen dar.

Bei einer vollständigen Mischbarkeit bzw. Mischung respektive einer vollständigen Löslichkeit bzw. Lösung der Substanzen ist die Mischung bzw. Lösung (nahezu) farblos bzw. klar bzw. transparent und weist somit einen vergleichsweise hohen, d. h. in Abhängigkeit der jeweils konkret miteinander vermischten Substanzen gegebenenfalls variierenden, Transmissionsgrad auf. Der Transmissionsgrad der Mischung kann bei einer vollständigen Mischung bzw. Lösung z.

B. wenigstens 80% in dem für den Menschen sichtbaren Wellenlängenbereich (ca. 350 bis ca. 750nm) betragen.

Sollte sich in dem dritten Schritt des Verfahrens eine Unmischbarkeit der miteinander zu vermischenden Substanzen bzw. eine Unlöslichkeit der ineinander zu lösenden Substanzen zeigen, ist die Kombination der bereitgestellten Binder- und Weichmachermaterialien zur Herstellung der Bindermatrix nicht geeignet. Es wird dann eine andere Kombination von Binder- und Weichmachermaterialien zur Herstellung der Bindermatrix gewählt.

In allen anderen Fällen wird die Mischung in einem in Fig. 1 durch den Kasten S4 angedeuteten vierten Schritt des Verfahrens ausgehend von der Mischungstemperatur abgekühlt. Der Einsatz von Kühlelementen, welche eine konzertierte, d. h. insbesondere gleichmäßige, Abkühlung der Mischung ermöglichen, ist denkbar. Das Abkühlen der Mischung erfolgt in der Regel dann, wenn - bei grundsätzlicher Mischbarkeit bzw. Löslichkeit - eine vollständige Mischung bzw. Lösung des Bindermaterials in dem Weichmachermaterial gegeben ist bzw. wenn das Bindermaterial vollständig in dem Weichmachermaterial gelöst ist.

Bei Abkühlung der Mischung wird eine mit der Abkühlung der Mischung einhergehende Veränderung wenigstens einer optischen Eigenschaft der Mischung, d. h. z. B. eine Veränderung des Transmissionsgrads der Mischung, d. h. eine Veränderung wenigstens einer optischen Eigenschaft der Mischung in Abhängigkeit der Temperatur der Mischung erfasst.

Es wird untersucht, bei welcher Temperatur sich die wenigstens eine optische Eigenschaft der Mischung verändert. Hierzu können in Abhängigkeit der jeweils konkret betrachteten optischen Eigenschaft der Mischung bestimmte Grenzwerte für die jeweils betrachtete optische Eigenschaft der Mischung herangezogen werden. Entsprechende Grenzwerte werden typischerweise in Abhängigkeit der Zusammensetzung der Mischung bzw. der vermischten Substanzen festgelegt.

Für das Beispiel einer Betrachtung des Transmissionsgrads der Mischung wird entsprechend untersucht, wann der sich mit Veränderung der Temperatur während des Abkühlens verändernde Transmissionsgrad einen vorher, typischerweise in Abhängigkeit der Zusammensetzung der Mischung bzw. der vermischten Substanzen festzulegenden bzw. festgelegten, (zweiten) Transmissionsgrad unterschreitet. Der zweite Transmissionsgrad liegt typischerweise unterhalb des ersten Transmissionsgrads. Der zweite Transmissionsgrad kann insofern als Transmissionsgrenzwert bezeichnet bzw. erachtet werden.

Der zweite Transmissionsgrad ist typischerweise dann erreicht, wenn eine mit dem Auge erkennbare Änderung des Transmissionsgrads der Mischung, d. h. insbesondere eine Trübung der Mischung bzw. der Beginn einer Trübung der Mischung, auftritt.

Es wird also typischerweise untersucht, wann eine Trübung der Mischung bzw. der Beginn einer Trübung der Mischung auftritt. Entsprechend ist eine Veränderung der optischen Eigenschaften der Mischung, d. h. gegebenenfalls auch ein zweiter Transmissionsgrad, gegeben, wenn eine, z. B. milchige, Trübung der Mischung einsetzt bzw. die Mischung beginnt, sich, z. B. milchig, zu trüben. Wesentlich ist, dass die Veränderung der optischen Eigenschaften der Mischung, d. h. gegebenenfalls auch ein zweiter Transmissionsgrad, bereits bei einem Einsetzen einer Trübung der Mischung gegeben sein kann.

In dem vierten Schritt des Verfahrens wird ferner die Temperatur, bei welcher die Veränderung der wenigstens einen optischen Eigenschaft der Mischung, d. h. z. B. eine Trübung, auftritt, erfasst. Die Temperatur, bei welcher die Veränderung der wenigstens einen optischen Eigenschaft der Mischung, d. h. z. B. eine Trübung, auftritt, d. h. z. B. auch die Temperatur, bei welcher der Transmissionsgrad der Mischung auf den zweiten Transmissionsgrad abfällt bzw. den zweiten Transmissionsgrad erreicht, wird als kritische Temperatur bezeichnet und stellt ein Maß für die chemisch-physikalische Verträglichkeit der vermischten Substanzen und somit für die Güte der Mischung bzw. der herzustellenden Bindermatrix dar.

Der in Fig. 1 durch den Kasten S5 angedeutete fünfte Schritt des Verfahrens ist mit der eigentlichen Herstellung der Bindermatrix verbunden. Die hergestellte Mischung bzw. eine Mischung entsprechender Zusammensetzung wird dann als Bindermatrix für anorganisches bzw. keramisches Feststoffpartikelmaterial verwendet, wenn die erfasste kritische Temperatur unterhalb einer vorgebbaren oder vorgegebenen Referenztemperatur liegt. Die Vorgabe der Referenztemperatur erfolgt in Abhängigkeit der chemischen bzw. anteilsmäßigen Zusammensetzung der Mischung.

Die Referenztemperatur liegt typischerweise in einem Bereich zwischen 20 und 100°C, insbesondere in einem Bereich zwischen 40 und 70°C, bevorzugt unterhalb 70°C, besonders bevorzugt unterhalb 40°C.

Untersuchungen zeigten in überraschender Weise, dass die kritische Temperatur, bei welcher eine sichtbare Änderung der optischen Eigenschaften, insbesondere des Transmissionsgrads, der Mischung im Zuge des Abkühlens der Mischung auftritt, ein maßgebliches Kriterium für die chemisch-physikalische Verträglichkeit und somit die Güte der Mischung bzw. der Bindermatrix ist. Entsprechend wird in Abhängigkeit des Vergleichs der erfassten kritischen Temperatur mit einer entsprechenden Referenztemperatur entschieden, ob und inwieweit die in der Mischung enthaltenen Binder- und Weichmachermaterialien chemisch-physikalisch verträglich sind und sich die Mischung insofern als Bindermatrix für anorganisches bzw. keramisches Feststoffpartikelmaterial eignet.

Liegt die erfasste kritische Temperatur unterhalb der Referenztemperatur, eignet sich die hergestellte Mischung als Bindermatrix für ein anorganisches bzw. keramisches Feststoffpartikelmaterial bzw. wird als Bindermatrix für ein anorganisches bzw. keramisches Feststoffpartikelmaterial verwendet.

In nachfolgender Tabelle sind beispielhaft kritische Temperaturen für zwei unterschiedliche Polyvinylbutyrale mit unterschiedlichen Anteilen an Alkoholgruppen, nämlich einem Polyvinylbutyral (PVB 1) mit einem Anteil der Alkoholgruppe von ca. 30 Gew.-% und einem Polyvinylbutyral (PVB2) mit einem Anteil der Alkoholgruppe von ca. 15 Gew.-%, in Kombination mit unterschiedlichen Weichmachermaterialien, nämlich Bis(2-ethylhexyl)adipat, Triethylenglykol-bis(2-ethylhexanoat), n-Dibutylsebacat und n-Dibutyladipat, zusammengefasst:

|  | PVB 1 | PVB 2 |
|---|---|---|
| Bis(2-ethylhexyl)adipat | 145°C | 114°C |
| Triethylenglykol-bis(2-ethylhexanoat) | 102°C | 45°C |
| n-Dibutylsebacat | 86°C | 30°C |
| n-Dibutyladipat | 51°C | 12°C |

Aus der Tabelle lässt sich der Einfluss des Anteils der Alkoholgruppe des Polyvinylbutyrals auf die kritische Temperatur und die chemisch-physikalische Verträglichkeit der jeweiligen Polyvinylbutyrale mit jeweiligen Weichmachermaterialien erkennen. Wie erwähnt, sind zur Herstellung der Bindermatrix insbesondere Kombinationen zu verwenden, deren kritische Temperatur (möglichst deutlich) unterhalb 100°C liegt.

Fig. 2 zeigt eine Prinzipdarstellung eines keramischen Bauteils 1, welches eine gemäß einem Ausführungsbeispiel hergestellte Bindermatrix für keramisches Feststoffpartikelmaterial enthält. Demgegenüber zeigt Fig. 3 eine Prinzipdarstellung eines keramischen Bauteils, welches eine gemäß dem Stand der Technik hergestellte Bindermatrix für keramisches Feststoffpartikelmaterial enthält. Die in den Fig. 2, 3 gezeigten Prinzipdarstellungen stellen jeweils einen Schliff durch das keramische Bauteil 1 dar.

Anhand der Fig. 2 und Fig. 3 ist ersichtlich, dass sich mit einer gemäß dem vorstehend beschriebenen Verfahren hergestellten Bindermatrix die Problematik von Entmischungserscheinungen, welche zu einer Anlagerung bzw. Migration von Weichmachermaterialien im Bereich der Oberfläche des aus Bindermatrix und darin eingebrachtem anorganischen Feststoffpartikelmaterial hergestellten dispersen Stoffgemenges bzw. der Oberfläche eines aus einem entsprechenden dispersen Stoffgemenge hergestellten keramischen Grünkörpers führen und so eine unerwünschte Porosität, insbesondere einhergehend mit einer ebenso unerwünschten ungleichmäßigen Verteilung von Poren 2, bedingen, nicht stellt.

Das Weichmachermaterial kann aus einer im Hinblick auf die chemisch-physikalische Verträglichkeit des Weichmachermaterials mit dem Bindermaterial, insbesondere im Hinblick auf die Löslichkeit des Bindermaterials in dem Weichmachermaterial, getroffenen Vorauswahl ausgewählt werden. Die Vorauswahl wird anhand einer Ermittlung des prozentualen Anteils der Sauerstoffatome in dem Weichmachermaterial und eines Vergleichs des ermittelten prozentualen Sauerstoffanteils in dem Weichmachermaterial mit einem für ein bestimmtes Bindermaterial festlegbaren oder festgelegten Sauerstoffanteilskriterium getroffen. Der prozentuale Sauerstoffanteil ergibt sich aus dem Verhältnis der Anzahl der Sauerstoffatome in einem Weichmachermaterialmolekül und der Anzahl der übrigen Atome in dem Weichmachermaterialmolekül. Es werden dann nur Weichmachermaterialien vorausgewählt und im Weiteren zur Herstellung der Bindermatrix bereitgestellt, deren ermittelter Sauerstoffanteil das für das bestimmte Bindermaterial festlegbare oder festgelegte Sauerstoffanteilskriterium erfüllt.

Der prozentuale Anteil der Sauerstoffatome in einem Weichmachermaterial wird aus dem Quotienten der Gesamtanzahl der Sauerstoffatome in dem Weichmachermaterial, d. h. in einem Molekül des Weichmachermaterials, und der Gesamtanzahl der übrigen Atome, d. h. bei organischen Weichmachermaterialien typischerweise Kohlenstoff- und Wasserstoffatome, in dem Molekül des Weichmachermaterials ermittelt. Zur Ermittlung des prozentualen Anteils der Sauerstoffatome ("O-Atome") in einem Weichmachermaterialmolekül wird nachfolgende Formel herangezogen:

$$\frac{Anzahl\ der\ O\text{-}Atome}{Anzahl\ der\ übrigen\ Atome} \cdot 100\% = prozentualer\ Anteil\ der\ O\text{-}Atome$$

Das Sauerstoffanteilskriterium ist insbesondere in Abhängigkeit der chemischen Struktur des mit dem Bindermaterial zu vermischenden Weichmachermaterials festzulegen. Maßgeblich ist dabei insbesondere der prozentuale (molekülbezogene) Anteil an veresterten Alkoholgruppen, allgemein der Anteil an Sauerstoffatome enthaltenden Gruppen, d. h. insbesondere Ester- oder Ethergruppen, bzw. einzelnen Sauerstoffatomen in dem Weichmachermaterial, in Abhängigkeit dessen das Sauerstoffkriterium sonach typischerweise festgelegt wird.

Bei einem Bindermaterial mit einem prozentualen (molekülbezogenen) Anteil an Alkoholgruppen pro Bindermaterialmolekül in einem Bereich zwischen 15 und 45% wird ein Weichmachermaterial mit einem prozentualen (molekülbezogenen) Anteil an Sauerstoffatomen von wenigstens 5%, insbesondere wenigstens 7,5%, bevorzugt wenigstens 10%, ausgewählt.

Bei einem Bindermaterial mit einem prozentualen (molekülbezogenen) Anteil an Alkoholgruppen pro Bindermaterialmolekül in einem Bereich zwischen 10 und 20% kann gegebenenfalls auch ein Weichmachermaterial mit einem prozentualen (molekülbezogenen) Anteil an Sauerstoffatomen von höchstens 10%, insbesondere höchstens 4%, ausgewählt werden.

Nachfolgend wird ein Laborbeispiel zur Herstellung einer Bindermatrix für ein anorganisches bzw. keramisches Feststoffpartikelmaterial bzw. im Weiteren die Verwendung einer entsprechenden Bindermatrix im Zusammenhang mit der Herstellung keramischer Grünkörper näher erläutert:

In dem Laborbeispiel wird in einem Behältnis als Weichmachermaterial 150g n-Dibutylsebacat bereitgestellt bzw. vorgelegt. Bei Raumtemperatur werden unter Rühren 12g Polyvinylbutyral mit einem Anteil an Alkoholgruppen (Polyvinylalkohol) von 14 Gew.-% als Bindermaterial zugemischt. Die gebildete Mischung bzw. Lösung wird unter weiterem Rühren bis auf 150°C erwärmt, bis das Polyvinylbutyral vollständig gelöst ist. Die hergestellte Mischung ist farblos klar. Die Mischung wird im Weiteren abgekühlt. Bei einer Temperatur von ca. 30°C wird eine Änderung des Transmissionsgrads der Mischung durch eine Trübung beobachtet. Eine entsprechende Bindermatrix kann als Teil einer Rezeptur für einen keramischen Schlicker im Zusammenhang mit der Herstellung keramischer Grünköper hergestellt bzw. verwendet werden.

Im Rahmen der Herstellung eines keramischen Grünkörpers wird als Feststoffpartikelmaterial ein Aluminiumoxid unter Zugabe eines gängigen Dispergierungsmittels einem kombinierten Mahl-/Mischprozess unterzogen. Der Mahl-/Mischprozess wird zeitweise unterbrochen, um Polyvinylbutyral mit einem Anteil an Alkoholgruppen (Polyvinylalkohol) von 14 Gew.-% als Bindermaterial und n-Dibutylsebacat als Weichmachermaterial zuzugeben. Nach Zugabe des Bindermaterials und des Weichmachermaterials wird der Mahl-/Mischprozess fortgesetzt, bis das Bindermaterial vollständig gelöst ist.

Der so hergestellte keramische Schlicker, bestehend aus Feststoffpartikelmaterial und Bindermatrix, wird vermittels Unterdrucks bzw. Vakuums von sich gegebenenfalls gebildeten Gasblasen befreit. Aus dem keramischen Schlicker wird in einem Gießprozess ein folienartiger keramischer Grünkörper hergestellt. Der keramische Grünkörper kann, z. B. durch Stanzprozesse, in einzelne Grünkörperelemente vereinzelt werden. Die vereinzelten Grünkörperelemente können gesintert werden. Vor dem Sintern können die vereinzelten Grünkörperelemente beschichtet und in Stapeln angeordnet und laminiert bzw. verbunden werden (z. B. für eine sog. Multilayer-Struktur einer Brennstoffzelle).

Eine gemäß dem vorstehend beschriebenen Ausführungsbeispiel eines Verfahrens zur Herstellung einer Bindermatrix für ein anorganisches bzw. keramisches Feststoffpartikelmaterial hergestellte Bindermatrix kann sonach in einem Verfahren zur Herstellung eines keramischen Grünkörpers eingesetzt werden. Das Verfahren zur Herstellung eines keramischen Grünkörpers zeichnet sich durch die folgenden Schritte aus:

- Bereitstellen einer gemäß dem vorstehend beschriebenen Ausführungsbeispiel eines Verfahrens zur Herstellung einer Bindermatrix für ein anorganisches bzw. keramisches Feststoffpartikelmaterial hergestellten Bindermatrix,
- Einbringen wenigstens eines anorganischen bzw. insbesondere keramischen Feststoffpartikelmaterials sowie gegebenenfalls weiterer Zusatzstoffe, insbesondere Dispergierungsmittel zur Dispergierung der in der Bindermatrix enthaltenen anorganischen Bestandteile, insbesondere des anorganischen Feststoffpartikelmaterials, und/oder Stabilisierungsmittel zur Stabilisierung der in der Bindermatrix enthaltenen anorganischen Bestandteile, insbesondere des anorganischen Feststoffpartikelmaterials, in die Bindermatrix unter Ausbildung eines (dispersen) Stoffgemenges, insbesondere eines keramischen Schlickers,
- Ausbilden, d. h. z. B. Gießen, des herzustellenden keramischen Grünkörpers aus dem (dispersen) Stoffgemenge.

In dem verfahrensgemäß hergestellten keramischen Grünkörper liegt der Anteil an Feststoffpartikelmaterial insbesondere zwischen 80 und 95 Gew.-%, der Anteil an Bindermatrix liegt insbesondere zwischen 5 und 20 Gew.-%. Die jeweiligen Anteile an Feststoffpartikelmaterial und Bindermatrix addieren sich zu 100 Gew.-%.

Der verfahrensgemäß hergestellte keramische Grünkörper weist nach einer Temperaturbehandlung, d. h. insbesondere einem Sintern, in einem Temperaturbereich zwischen 1300 und 1750°C, insbesondere zwischen 1450 und 1550°C, typischerweise eine Sinterschwindung in einem Bereich zwischen 15 und 25%, insbesondere zwischen 16 und 22%, auf. Die Sinterdichte eines durch Sintern in dem vorgenannten Temperaturbereich aus dem keramischen Grünkörper hergestellten gesinterten keramischen Bauteils 1 beträgt typischerweise wenigstens 95% der theoretischen Dichte (bezogen auf die Elementarzelle der kristallinen Struktur des keramischen Bauteils).

Bei dem verfahrensgemäß hergestellten keramischen Grünkörper handelt es sich insbesondere um eine keramische Grünkörperfolie (Grünfolie). Der keramische Grünkörper weist sonach insbesondere eine folienartige Gestalt auf. Die Dicke einer entsprechenden keramischen Grünkörperfolie liegt typischerweise in einem Bereich zwischen 10

und 2500μm, insbesondere zwischen 50 und 1000μm.

Ein entsprechender Grünkörper kann ein keramisches Vorprodukt 1 bilden respektive kann aus einem entsprechenden keramischen Grünkörper, insbesondere durch Sintern, ein keramisches Produkt 1' hergestellt werden. Ein keramisches Vorprodukt 1 kann also ungesintert, teilgesintert oder vollständig gesintert vorliegen. Ein keramisches Produkt 1' liegt typischerweise teilgesintert oder vollständig gesintert vor.

Bei dem keramischen Vorprodukt 1 bzw. dem keramischen Produkt 1' kann es sich z. B. um ein Vorprodukt für eine keramische Leiterplatte oder eine keramische Leiterplatte, oder um ein Vorprodukt für einen keramischen Sensor, insbesondere einen Druck-, Gas-, oder Temperatursensor, oder einen keramischer Sensor, insbesondere einen Druck-, Gas-, oder Temperatursensor, oder um ein Vorprodukt eines Brennstoffzellenelements, insbesondere eine Elektrode oder einen Elektrolyten, oder um ein Brennstoffzellenelement, insbesondere eine Elektrode oder einen Elektrolyten, oder um ein Vorprodukt eines Brennhilfsmittels oder ein Brennhilfsmittel verwendet wird, oder um ein Vorprodukt für ein Katalysatorelement oder ein Katalysatorelement, oder um ein Vorprodukt eines Verschleißbauteils, insbesondere ein Verschleiß ausgesetztes Bremselement, insbesondere eines Kraftfahrzeugs, oder ein Verschleißbauteil, insbesondere ein Verschleiß ausgesetztes Bremselement, insbesondere für ein Kraftfahrzeug, oder um ein Vorprodukt für ein thermisch leitfähiges Leitungselement oder ein thermisch leitfähiges Leitungselement, oder um ein Vorprodukt für ein Heizelement, insbesondere ein Flachheizelement, oder ein Heizelement, insbesondere ein Flachheizelement, handeln.

Ein entsprechendes keramisches Vorprodukt 1 bzw. Produkt 1' lässt sich sonach im Rahmen der vorstehend genannten Anwendungs- bzw. Einsatzgebiete verwenden.

Das keramische Vorprodukt 1 bzw. Produkt 1' kann mit geeigneten Dotierungsmitteln bzw. -stoffen dotiert sein, um eine gezielte Beeinflussung der physikalischen Eigenschaften bzw. eine Funktionalisierung, z. B. im Hinblick auf bestimmte physikalische, d. h. z. B. elektrische, mechanische, thermische, tribologische, Eigenschaften, des keramischen Vorprodukts 1 bzw. Produkts 1' zu realisieren.

BEZUGSZEICHENLISTE

1    keramisches Vorprodukt
1'   keramisches Produkt
2    Pore

**Patentansprüche**

1. Verfahren zur Herstellung einer wenigstens ein Bindermaterial und wenigstens ein Weichmachermaterial enthaltenden Bindermatrix für ein anorganisches, insbesondere keramisches, Feststoffpartikelmaterial, **gekennzeichnet durch** die folgenden Schritte:

   - Bereitstellen wenigstens eines Bindermaterials,
   - Bereitstellen wenigstens eines Weichmachermaterials,
   - Herstellen einer Mischung **durch** Vermischen des Bindermaterials und des Weichmachermaterials bei einer bestimmten Mischungstemperatur, wobei die Mischung bestimmte optische Eigenschaften aufweist,
   - Abkühlen der Mischung ausgehend von der bestimmten Mischungstemperatur und Erfassen einer kritischen Temperatur, bei welcher eine Veränderung wenigstens einer optischen Eigenschaft der Mischung auftritt,
   - Verwenden der Mischung als Bindermatrix für ein anorganisches, insbesondere keramisches, Feststoffpartikelmaterial, sofern die erfasste kritische Temperatur unterhalb einer vorgebbaren oder vorgegebenen Referenztemperatur liegt.

2. Verfahren nach Anspruch 1, **dadurch gekennzeichnet, dass** ein Bindermaterial verwendet wird, welches als eine wenigstens eine Alkoholgruppe aufweisende chemische, insbesondere organische, Substanz ausgebildet ist oder wenigstens eine wenigstens eine Alkoholgruppe aufweisende chemische, insbesondere organische, Substanz umfasst.

3. Verfahren nach Anspruch 1 oder 2, **dadurch gekennzeichnet, dass** ein Weichmachermaterial verwendet wird, welches als eine wenigstens ein Sauerstoffatom aufweisende chemische, insbesondere organische, Substanz ausgebildet ist oder wenigstens eine wenigstens ein Sauerstoffatom aufweisende chemische, insbesondere organische, Substanz umfasst.

**4.** Verfahren nach Anspruch 2 und 3, **dadurch gekennzeichnet, dass** wenigstens ein Weichmachermaterial aus einer im Hinblick auf die chemische Verträglichkeit des Weichmachermaterials mit dem wenigstens einen Bindermaterial, insbesondere im Hinblick auf die Löslichkeit des Bindermaterials in dem wenigstens einen Weichmachermaterial, getroffenen Vorauswahl bereitgestellt wird, wobei die Vorauswahl anhand einer Ermittlung des prozentualen Anteils der Sauerstoffatome in dem wenigstens einen Weichmachermaterial und eines Vergleichs des ermittelten prozentualen Sauerstoffanteils in dem wenigstens einen Weichmachermaterial mit einem für wenigstens ein bestimmtes Bindermaterial festlegbaren oder festgelegten Sauerstoffanteilskriterium getroffen wird, wobei nur Weichmachermaterialien vorausgewählt werden, deren ermittelter Sauerstoffanteil das für das bestimmte Bindermaterial festlegbare oder festgelegte Sauerstoffanteilskriterium erfüllt.

**5.** Verfahren nach Anspruch 4, **dadurch gekennzeichnet, dass** bei einem Bindermaterial mit einem prozentualen Anteil an Alkoholgruppen in einem Bereich zwischen 15 und 45% ein Weichmachermaterial mit einem prozentualen Anteil an Sauerstoffatomen von wenigstens 5%, insbesondere wenigstens 7,5%, bevorzugt wenigstens 10%, ausgewählt wird.

**6.** Verfahren nach Anspruch 2, **dadurch gekennzeichnet, dass** als Bindermaterial ein Polyvinylacetal oder eine Polyvinylacetalverbindung, insbesondere Polyvinylbutyral, verwendet wird.

**7.** Verfahren nach Anspruch 3, **dadurch gekennzeichnet, dass** als Weichmachermaterial ein Diester oder wenigstens eine Diesterverbindung, insbesondere eine Diesterverbindung aus Adipinsäure und/oder Phthalsäure und/oder Sebacinsäure, verwendet wird.

**8.** Verfahren nach einem der vorhergehenden Ansprüche, **dadurch gekennzeichnet, dass** eine Veränderung wenigstens einer optischen Eigenschaft der Mischung eine Trübung der Mischung bzw. der Beginn einer Trübung der Mischung ist.

**9.** Verfahren nach einem der vorhergehenden Ansprüche, **dadurch gekennzeichnet, dass** eine Mischungstemperatur verwendet wird, die in einem Bereich zwischen 100 und 160°C, insbesondere bei 150°C, liegt.

**10.** Verfahren nach einem der vorhergehenden Ansprüche, **dadurch gekennzeichnet, dass** eine Referenztemperatur verwendet wird, die in einem Bereich zwischen 20 und 100°C, insbesondere in einem Bereich zwischen 40 und 70°C, bevorzugt unterhalb 70°C, besonders bevorzugt unterhalb 40°C, liegt.

**11.** Verfahren nach einem der vorhergehenden Ansprüche, **dadurch gekennzeichnet, dass** das Abkühlen der Mischung erfolgt, wenn als Mischung eine vollständige Lösung des wenigstens einen Bindermaterials in dem wenigstens einen Weichmachermaterial gegeben ist.

**12.** Verfahren zur Herstellung eines keramischen Grünkörpers, insbesondere eines folienartigen keramischen Grünkörpers, **gekennzeichnet durch** die folgenden Schritte:

- Bereitstellen einer gemäß einem Verfahren nach einem der vorhergehenden Ansprüche hergestellten Bindermatrix,
- Einbringen wenigstens eines anorganischen, insbesondere keramischen, Feststoffpartikelmaterials sowie gegebenenfalls weiterer Zusatzstoffe in die Bindermatrix unter Ausbildung eines Stoffgemenges, insbesondere eines keramischen Schlickers,
- Ausbilden des keramischen Grünkörpers aus dem Stoffgemenge.

**13.** Keramisches Vorprodukt (1) oder Produkt (1'), **dadurch gekennzeichnet, dass** es ein keramischer Grünkörper gemäß dem Verfahren nach Anspruch 12 ist oder aus einem keramischen Grünkörper gemäß dem Verfahren nach Anspruch 12 hergestellt ist.

**14.** Verwendung eines keramischen Vorprodukts (1) oder Produkts (1') nach Anspruch 13, **dadurch gekennzeichnet, dass** es als Vorprodukt für eine keramische Leiterplatte oder als keramische Leiterplatte verwendet wird, oder als Vorprodukt für einen keramischen Sensor, insbesondere einen Druck-, Gas-, oder Temperatursensor, oder als keramischer Sensor, insbesondere als Druck-, Gas-, oder Temperatursensor, verwendet wird, oder als Vorprodukt eines Brennstoffzellenelements, insbesondere einer Elektrode oder eines Elektrolyten, oder als Brennstoffzellenelement, insbesondere als Elektrode oder als Elektrolyt, verwendet wird, oder als Vorprodukt eines Brennhilfsmittels oder als Brennhilfsmittel verwendet wird, oder als Vorprodukt für ein Katalysatorelement oder als Katalysatorelement verwendet wird, oder als Vorprodukt eines Verschleißbauteils, insbesondere eines Verschleiß ausgesetzten Bremselements, insbesondere eines Kraftfahrzeugs, oder als Verschleißbauteil, insbesondere als ein Verschleiß ausgesetztes Bremselement, insbesondere für ein Kraftfahrzeug, verwendet wird, oder als Vorprodukt für ein thermisch leitfähiges Leitungselement oder als thermisch leitfähiges Leitungselement, oder als Vorprodukt für ein Heizelement, insbesondere ein Flachheizelement, oder als Heizelement, insbesondere Flachheizelement, verwendet wird.

S1

S2

S3

S4

S5

Fig. 1

Fig. 2

Fig. 3